# FASCICULE DE BREVET EUROPEEN

(11) **EP 3 385 152 B1**
(45) Date de publication et mention de la délivrance du brevet: **01.07.2020**
(21) Numéro de dépôt: 18165720.6
(22) Date de dépôt: 04.04.2018
(51) Int. Cl.: B62K 21/02, B21K 21/00, B62K 21/04

(54) **FOURCHE DE VÉLO ET PIVOT ET TÊTE DE FOURCHE LA COMPOSANT**
FAHRRADGABEL UND GABELSCHAFT UND GABELKOPF, AUS DEM DIESE BESTEHT
BICYCLE FORK AND PIVOT AND FORK HEAD FORMING SAME

(30) Priorité: 04.04.2017 FR 1752891
(43) Date de publication de la demande: 10.10.2018
(73) Titulaire: Bossard, Olivier, 31240 Saint Jean (FR)
(72) Inventeur: Bossard, Olivier, 31240 Saint Jean (FR)
(74) Mandataire: Ipside

(56) Documents cités:
- DE-A1-102013 214 584
- US-A- 5 762 352
- US-A1- 2006 186 632

## Description

### Domaine de l'invention

L'invention relève des structures de véhicules deux roues, notamment de celles des vélos. Elle s'inscrit dans le domaine des fourches de vélos tout terrain et concerne plus particulièrement une fourche de vélo et un pivot de fourche et une tête de fourche la composant.

### État de l'art

Les fourches de vélo sont souvent formées d'une pièce tubulaire appelée « pivot de fourche » rigidement fixée par l'une de ses extrémités au guidon du vélo et par son autre extrémité à une pièce transversale appelée « tête de fourche ». La tête de fourche constitue une pièce de liaison de deux tubes parallèles à laquelle ils sont fixés par une de leurs extrémités et entre lesquels la roue avant du vélo peut tourner par le biais d'un moyeu. La tête de fourche a ainsi pour rôle de répartir les efforts appliqués sur le guidon, de chaque coté du moyeu de la roue avant. Le pivot de fourche est connue pour être monté en rotation dans le cadre du vélo afin qu'un utilisateur puisse modifier la direction du vélo par action sur le guidon.

Une des problématiques existantes dans la conception des pièces constitutives d'un vélo est la recherche d'une perte de poids afin de limiter les effets dus à l'inertie lorsque le vélo est en déplacement, notamment en descente. Limiter les effets à l'inertie permet d'augmenter la maniabilité du vélo et permet un déplacement du vélo plus aisé, notamment en montée.

Toutefois, la recherche d'une perte de poids peut conduire à une diminution de la résistance des pièces aux contraintes mécaniques subies lorsque le vélo est en déplacement.

Une telle réduction de la résistance mécanique peut engendrer des ruptures mécaniques de pièces du vélo et par voie de conséquence des accidents.

Dans l'état de la technique les documents DE 10 2013 214584 A1, US 2006/186632 A1 et US 5 762 352 A divulguent des exemples de fourches de vélo selon le préambule de la revendication 1.

### Exposé de l'invention

La présente invention a pour objectif de palier les inconvénients précités en proposant une fourche de vélo dont le poids est réduit par rapport aux fourches de vélo de l'état de la technique.

Un autre objectif de la présente invention est de proposer une fourche de vélo de poids réduit permettant de participer à la réduction du poids d'un vélo en préservant la résistance aux contraintes mécaniques de ladite fourche de vélo.

A cet effet, la présente invention concerne une tête de fourche de vélo comprenant un logement traversant destiné à recevoir fixement un pivot de fourche de vélo. Le logement, par exemple formé par un alésage, comporte un chambrage définissant une gorge interposée entre deux portées annulaires intérieures d'appui dudit pivot.

Plus précisément, le logement comprend une paroi intérieure sur laquelle est agencé le chambrage, et par voie de conséquence, la gorge qu'il définit. Les portées annulaires intérieures sont également agencées sur la paroi intérieure du logement.

Grâce au chambrage, le poids de la tête de fourche est réduit. De plus, les deux portées annulaires intérieures, en étant distantes l'une de l'autre, c'est-à-dire non contigües, génèrent deux zones d'appui distinctes du pivot de fourche s'étendant préférentiellement de l'une à l'autre sur une longueur sensiblement identique à la longueur d'emmanchement d'un pivot de fourche dans une tête de fourche de l'état de la technique. Ainsi, la résistance aux contraintes mécaniques de la fourche est préservée.

Il y a lieu de noter que la gorge et/ou l'une ou les portées annulaires intérieures présentent la forme d'éléments géométriques de révolution, de même que le logement traversant, et partage(nt) préférentiellement le même axe de révolution que ce dernier.

En outre, le terme « chambrage » possède ici le sens généralement admis dans le domaine de la mécanique, c'est-à-dire un « évidement réalisé dans une pièce, généralement destiné à réduire la portée d'un alésage » ; de même que le terme « gorge », qui a pour signification un « dégagement destiné à éviter le contact de deux pièces suivant une ligne », les deux pièces étant ici respectivement la tête de fourche et le pivot.

Dans le présent texte, la tête de fourche peut aussi être appelée « té de fourche » par l'homme du métier.

Dans des modes particuliers de réalisation, l'invention répond en outre aux caractéristiques suivantes, mises en œuvre séparément ou en chacune de leurs combinaisons techniquement opérantes.

Dans des modes particuliers de réalisation de l'invention, les portées annulaires intérieures présentent un diamètre différent l'une de l'autre.

Avantageusement, le diamètre d'une première des portées annulaire intérieure peut être égal à un diamètre standardisé ou normalisé, et le diamètre de la deuxième portée annulaire intérieure peut être supérieur au diamètre de la première portée.

Augmenter le diamètre d'une des portées annulaires intérieures par rapport à l'autre permet de pouvoir diminuer le volume de matière formant la tête de fourche, et permet donc de pouvoir diminuer le poids de la tête de fourche.

En outre, augmenter le diamètre de la portée annulaire intérieure permet d'augmenter la résistance aux contraintes mécaniques du pivot de fourche.

Dans des modes particuliers de réalisation de l'invention la gorge radiale comprend des nervures.

Les nervures permettent de rigidifier les portées annulaires intérieures, et ainsi d'éviter toute déformation desdites portées lors de l'assemblage avec le pivot de fourche.

Les nervures peuvent s'étendre axialement dans la gorge radiale, d'une portée annulaire intérieure à l'autre.

Dans des modes de réalisation de l'invention, le logement s'étend entre une première extrémité dite « extrémité supérieure » et une seconde extrémité dite « extrémité inférieure ». Le logement comprend une portée annulaire intérieure à chacune de ses extrémités supérieure et inférieure.

Cette caractéristique permet de réduire davantage le poids de la tête de fourche.

L'invention a également pour objet un pivot de fourche de vélo destiné à être emmanché fixement dans un logement d'une tête de fourche telle que précédemment décrite. Le pivot de fourche s'étend entre deux extrémités longitudinales et présente au moins deux portées annulaires extérieures respectivement arrangées de sorte à être en appui contre des portées annulaires intérieures lorsque le pivot de fourche de vélo est emmanché fixement dans le logement de ladite tête de fourche.

Dans des modes particuliers de réalisation de l'invention, les au moins deux portées annulaires extérieures présentent un diamètre différent l'une de l'autre, et elles sont reliées entre elles par au moins une portion tronconique.

Les concentrations de contraintes sont ainsi limitées dans le pivot de fourche.

Le pivot de fourche est formé par un tube creux d'épaisseur constante.

Ces caractéristiques participent à augmenter la résistance aux contraintes mécaniques.

En outre, la présente invention a pour objet une fourche de vélo comprenant un pivot de fourche de vélo tel que précédemment décrit rigidement fixé à une tête de fourche tel que précédemment décrite.

Il est à noter que les portées annulaires intérieures peuvent être dimensionnées de sorte que la surface de contact entre le pivot de fourche et la tête de fourche soit sensiblement identique à celle de l'état de la technique. Ceci permet de préserver la rigidité de l'assemblage du pivot de fourche avec la tête de fourche.

Cette caractéristique a également pour avantage de limiter les contraintes internes liées à l'assemblage du pivot de fourche avec la tête de fourche.

### Présentation des figures

L'invention sera mieux comprise à la lecture de la description suivante, donnée à titre d'exemple nullement limitatif, et faite en se référant aux figures qui représentent :
- Figure 1 : une vue en coupe longitudinale d'une fourche de vélo selon l'invention selon un premier plan sensiblement vertical,
- Figure 2 : une vue en coupe longitudinale d'une fourche de vélo selon la figure 1 selon un second plan sensiblement vertical et une vue de détail de ladite vue en coupe,
- Figure 3 : une vue en perspective d'une tête de fourche selon l'invention,
- Figure 4 : une vue de détail d'une coupe transversale d'un logement d'une tête de fourche,
- Figure 5 : une vue en coupe longitudinale selon un plan horizontal d'une fourche de vélo selon la figure 1.

Dans ces figures, des références numériques identiques d'une figure à l'autre désignent des éléments identiques ou analogues. Par ailleurs, pour des raisons de clarté, les dessins ne sont pas à l'échelle.

### Description détaillée de l'invention

La présente invention concerne une tête de fourche 10 comprenant un logement 11 traversant destiné à recevoir fixement un pivot de fourche 20 afin de former une fourche de vélo 30.

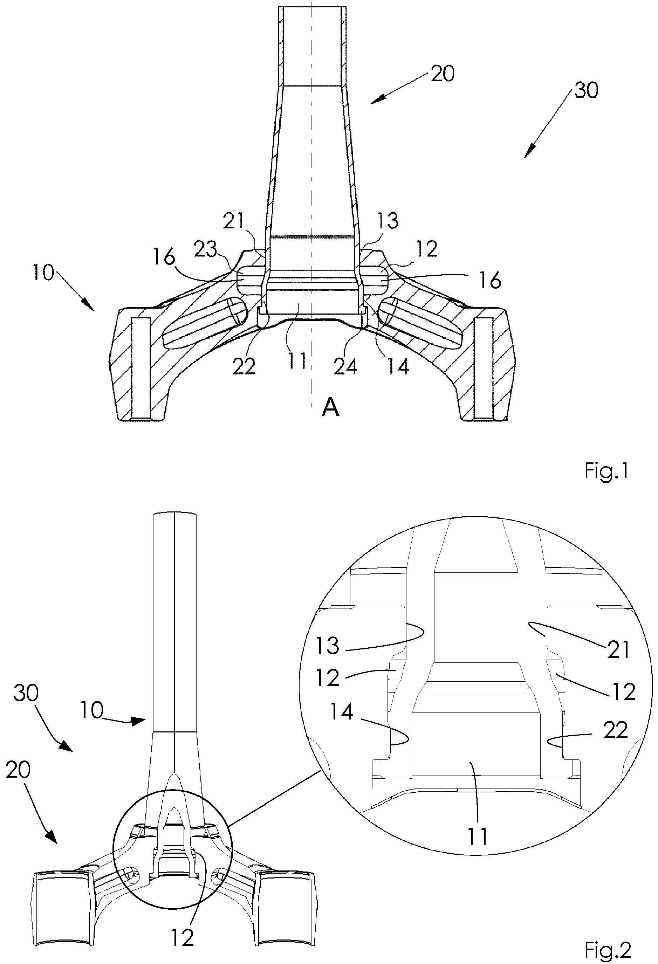

Le logement 11 est, par exemple, formé par un alésage s'étendant selon un axe longitudinal A sur la figure 1, et comporte une paroi intérieure comprenant un chambrage définissant une gorge 12 radiale. La paroi intérieure comprend également deux portées annulaires intérieures 13 et 14 d'appui dudit pivot de fourche 20. Comme le montrent les figures 1 à 4, la gorge radiale est interposée entre les deux portées annulaires intérieures 13 et 14 d'appui dudit pivot de fourche 20.

Par le terme « radial », on entend ici que la gorge s'étend suivant le rayon d'un cercle et suivant la totalité de la périphérie de ce cercle.

Comme le représentent les figures 2, 3 et 4, la gorge 12 et les portées annulaires intérieures 13 et 14 présentent la forme d'éléments géométriques de révolution, de même que le logement 11, et partagent le même axe de révolution que ce dernier.

Les portées annulaires intérieures 13 et 14 présentent respectivement la forme d'une bague dont la paroi interne est destinée à maintenir en position le pivot de fourche 20 par serrage. Plus précisément, le pivot de fourche 20 présente la forme d'un tube creux dont les parois sont d'épaisseur constante et comprend, à l'une de ses extrémités dite « extrémité inférieure », deux portées annulaires extérieures 21 et 22 respectivement destinées à être emmanchées dans les portées annulaires intérieures 13 et 14.

En plus de l'action de serrage, il peut être prévu d'ajouter de la colle ou tout autre matériau adhésif à l'interface entre le logement 11 de la tête de fourche 10 et le pivot de fourche 20. Dans ce cas, la gorge 12 peut avantageusement constituer un réservoir de colle ou de tout autre matériau adhésif.

Comme représenté sur les figures 1 à 4, le logement 11 s'étend entre une première extrémité dite « extrémité supérieure » et une seconde extrémité dite « extrémité inférieure ». Le logement 11 comprend une portée annulaire intérieure 13 et 14 à chacune de ses extrémités supérieure et inférieure, appelées respectivement dans la présente description « portée annulaire intérieure supérieure » 13 et « portée annulaire intérieure inférieure » 14.

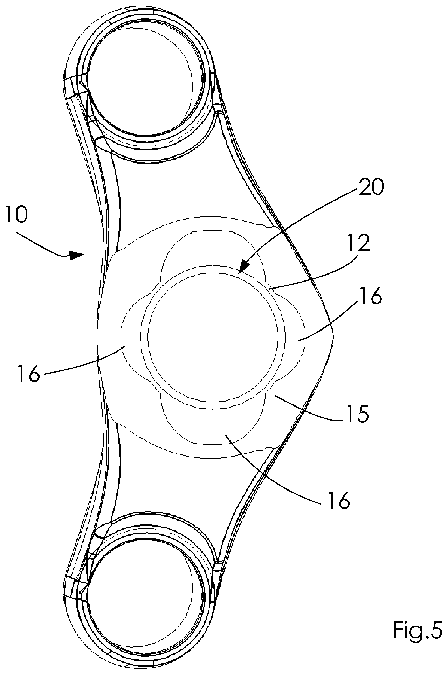

Avantageusement, les portées annulaires intérieures supérieure 13 et inférieure 14 présentent préférentiellement un diamètre différent l'une de l'autre. Plus particulièrement, dans l'exemple de réalisation représenté par les figures 1 à 5, le diamètre de la portée annulaire intérieure inférieure 14 est sensiblement plus important que celui de la portée annulaire intérieure supérieure 13.

De manière analogue, la portée extérieure 22 la plus proche de l'extrémité inférieure du pivot de fourche 20 présente un diamètre sensiblement plus important que l'autre portée extérieure 21.

Ceci a notamment pour effet de faciliter l'emmanchement du pivot de fourche 20 dans le logement 11 de la tête de fourche 10, et d'éliminer les risques d'endommagement du pivot de fourche 20 et de la tête de fourche 10 lors de l'emmanchement. En effet, dans cette configuration, les efforts de serrage sont appliqués par les deux portées annulaires intérieures supérieure 13 et inférieure 14 sur les portées annulaires extérieures 21 et 22 du pivot de fourche 20 de façon concomitante. Il y a lieu de noter que l'emmanchement du pivot de fourche 20 dans le logement 11 de la tête de fourche 10 peut être réalisé par l'utilisation de tout outil approprié, tel qu'une presse hydraulique connue de l'homme du métier.

Les deux portées annulaires extérieures 21 et 22 sont avantageusement reliées l'une à l'autre par une portion tronconique 23. Les concentrations de contraintes sont ainsi limitées dans le pivot de fourche 20, notamment lors de l'emmanchement.

En outre, le pivot de fourche 20 comprend, à son extrémité inférieure, une collerette 24 s'étendant vers l'extérieure. Cette collerette 24 est prévue pour être logée dans un lamage dont est pourvue la tête de fourche 10 à son extrémité inférieure, tel qu'illustré par les figures 1 et 2. La collerette 24 est destinée à venir en butée contre le lamage lors de l'emmanchement du pivot de fourche 20 dans le logement 11.

Dans l'exemple de réalisation représenté par les figures 1 à 5, les portées annulaires intérieures supérieure 13 et inférieure 14 sont concentriques, de même que les portées annulaires extérieures 21 et 22.

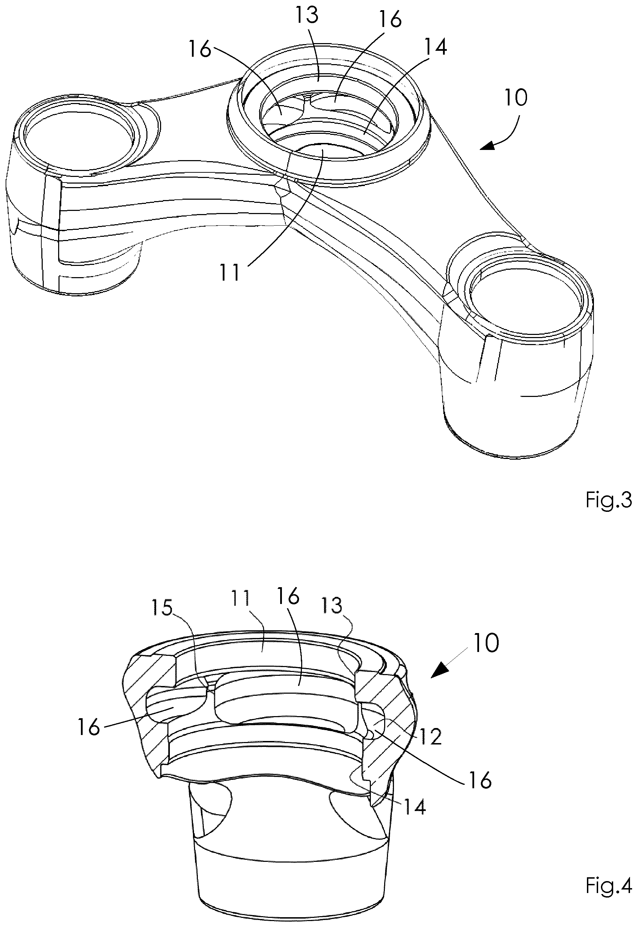

Par ailleurs, la gorge 12 peut avantageusement comprendre des nervures 15 afin de renforcer la résistance aux contraintes mécanique des portées annulaires intérieures supérieure 13 et inférieure 14 et d'éviter toute déformation ou détérioration desdites portées 13 et 14 lors de l'emmanchement du pivot de fourche 20. Les nervures 15 peuvent s'étendre axialement, tel que représenté sur les figures 3 à 5, de la portée annulaire inférieure 14 jusqu'à la portée annulaire supérieure 13.

Comme le montrent les figures 1 et 3 à 5, la gorge peut comprendre des cavités 16 internes radiales interposée entre deux nervures adjacentes. Ces cavités 16 sont également interposées entre les deux portées annulaires intérieures 13 et 14, de la même manière que la gorge 12. Ces cavités 16 sont borgnes, dans le sens où elles présentent une unique ouverture débouchant en vis-à-vis du logement 11. En outre, elles présentent préférentiellement la forme de lobes concaves, comme le montrent les figures 3 à 5, et sont préférentiellement au nombre de quatre.

Ces cavités 16 internes permettent avantageusement de réduire davantage le poids de la tête de fourche sans compromettre sa résistance aux contraintes mécaniques.

De manière plus générale, il est à noter que les modes de mise en œuvre et de réalisation considérés ci-dessus ont été décrits à titre d'exemples non limitatifs, et que d'autres variantes sont par conséquent envisageables.

## Revendications

1. Tête de fourche (10) de vélo comprenant un logement (11) traversant destiné à recevoir fixement un pivot de fourche (20) de vélo, ladite tête de fourche (10) étant **caractérisée en ce que** ledit logement (11) comporte un chambrage définissant une gorge (12) radiale interposée entre deux portées annulaires intérieures (13, 14) d'appui dudit pivot, la gorge (12) présentant la forme d'un élément géométrique de révolution, de même que le logement (11), et partageant le même axe de révolution que ce dernier.

2. Tête de fourche (10) de vélo selon la revendication 1, dans laquelle les portées annulaires intérieures (13, 14) présentent un diamètre différent l'une de l'autre.

3. Tête de fourche (10) de vélo selon l'une des revendications 1 ou 2, dans laquelle la gorge (12) comprend des nervures (15).

4. Tête de fourche (10) de vélo selon l'une des revendications 1 à 3, dans laquelle la gorge (12) comprend des cavités (16) internes radiales et borgnes, interposée entre deux nervures (15) adjacentes.

5. Tête de fourche (10) de vélo selon l'une des revendications 1 à 4, dans laquelle le logement (11) s'étend entre une première extrémité dite « extrémité supérieure » et une seconde extrémité dite « extrémité inférieure », ledit logement (11) comprenant une portée annulaire intérieure (13, 14) à chacune de ses extrémités supérieure et inférieure.

6. Pivot de fourche (20) de vélo destiné à être emmanché fixement dans un logement (11) d'une tête de fourche (10) selon l'une des revendications 1 à 5, s'étendant entre deux extrémités longitudinales et présentant au moins deux portées annulaires extérieures (21, 22) respectivement arrangées de sorte à être en appui contre des portées annulaires intérieures (13, 14) lorsque le pivot de fourche (20) de vélo est emmanché fixement dans le logement (11) de ladite tête de fourche (10).

7. Pivot de fourche (20) de vélo selon la revendication 6, dans lequel les au moins deux portées annulaires extérieures (21, 22) présentent un diamètre différent l'une de l'autre, et dans lequel elles sont reliées entre elles par au moins une portion tronconique (23).

8. Pivot de fourche (20) de vélo selon l'une des revendications 6 ou 7 formé par un tube creux dont la paroi est d'épaisseur constante.

9. Fourche de vélo comprenant un pivot de fourche (20) de vélo selon l'une des revendications 6 à 8 rigidement fixé à une tête de fourche (10) selon l'une des revendications 1 à 5.

## Patentansprüche

1. Fahrradgabelkopf (10), umfassend eine durchgehende Aufnahme (11), die dazu bestimmt ist, einen Fahrradgabelschaft (20) feststehend aufzunehmen, wobei der Gabelkopf (10) **dadurch gekennzeichnet ist, dass** die Aufnahme (11) eine zylindrische Ansenkung beinhaltet, die eine radiale Nut (12) definiert, die zwischen zwei inneren ringförmigen Anlageflächen (13, 14) des Schaftes eingesetzt ist, wobei die Nut (12) die Form eines geometrischen Rotationselements, ebenso wie die Aufnahme (11) aufweist, und mit letzterer dieselbe Rotationsachse teilt.

2. Fahrradgabelkopf (10) nach Anspruch 1, wobei die inneren ringförmigen Anlageflächen (13, 14) einen voneinander unterschiedlichen Durchmesser aufweisen.

3. Fahrradgabelkopf (10) nach einem der Ansprüche 1 oder 2, wobei die Nut (12) Rippen (15) umfasst.

4. Fahrradgabelkopf (10) nach einem der Ansprüche 1 bis 3, wobei die Nut (12) radiale innere und sacklochartige Hohlräume (16) umfasst, die zwischen zwei benachbarten Rippen (15) eingesetzt sind.

5. Fahrradgabelkopf (10) nach einem der Ansprüche 1 bis 4, wobei sich die Aufnahme (11) zwischen einem ersten, "oberen Ende" genannten Ende, und einem zweiten, "unteren Ende" genannten Ende erstreckt, wobei die Aufnahme (11) eine innere ringförmige Anlage (13, 14) an jedem ihres oberen und unteren Endes umfasst.

6. Fahrradgabelschaft (20), der dazu bestimmt ist, feststehend in eine Aufnahme (11) eines Gabelkopfes (10) nach einem der Ansprüche 1 bis 5 eingepresst zu werden, der sich zwischen zwei Längsenden erstreckt und mindestens zwei äußere ringförmige Anlageflächen (21, 22) aufweist, die jeweils derart angeordnet sind, um auf Anlage an den inneren ringförmigen Anlagen (13, 14) anzuliegen, wenn der Fahrradgabelschaft (20) feststehend in der Aufnahme (11) des Gabelkopfes (10) eingepresst ist.

7. Fahrradgabelschaft (20) nach Anspruch 6, wobei die mindestens zwei äußeren ringförmigen Anlagen (21, 22) einen voneinander unterschiedlichen Durchmesser aufweisen, und wobei sie durch mindestens einen kegelstumpfförmigen Abschnitt (23) miteinander verbunden sind.

8. Fahrradgabelschaft (20) nach einem der Ansprüche 6 oder 7, der durch ein hohles Rohr gebildet wird, dessen Wand von konstanter Dicke ist.

9. Fahrradgabel, einen Fahrradgabelschaft (20) nach einem der Ansprüche 6 bis 8 umfassend, der starr an einem Gabelkopf (10) nach einem der Ansprüche 1 bis 5 befestigt ist.

## Claims

1. A bicycle fork head (10) comprising a through housing (11) intended to fixedly receive a bicycle fork pivot (20), said fork head (10) being **characterised in that** said housing (11) includes a recess defining a radial groove (12) interposed between two inner annular bearing surfaces (13, 14) for supporting said pivot, the groove (12) having the shape of a geometric element of revolution, as well as the housing (11), and sharing the same axis of revolution as the latter.

2. The bicycle fork head (10) according to claim 1, wherein the inner annular bearing surfaces (13, 14) have a diameter different from one another.

3. The bicycle fork head (10) according to one of claims 1 or 2, wherein the groove (12) comprises ribs (15).

4. The bicycle fork head (10) according to one of claims 1 to 3, wherein the groove (12) comprises inner radial and blind cavities (16), interposed between two adjacent ribs (15).

5. The bicycle fork head (10) according to one of claims 1 to 4, wherein the housing (11) extends between a first end called "upper end" and a second end called "lower end", said housing (11) comprising an inner annular bearing surface (13, 14) at each of its upper and lower ends.

6. A bicycle fork pivot (20) intended to be fixedly fitted into a housing (11) of a fork head (10) according to one of claims 1 to 5, extending between two longitudinal ends and having at least two outer annular bearing surfaces (21, 22) respectively arranged so as to be supported against inner annular bearing surfaces (13, 14) when the bicycle fork pivot (20) is fixedly fitted into the housing (11) of said fork head (10).

7. The bicycle fork pivot (20) according to claim 6, wherein the at least two outer annular bearing surfaces (21, 22) have a diameter different from each other, and wherein they are connected to each other by at least one frusto-conical portion (23).

8. The bicycle fork pivot (20) according to one of claims 6 or 7 formed by a hollow tube whose wall is of constant thickness.

9. The bicycle fork comprising a bicycle fork pivot (20) according to one of claims 6 to 8 which is rigidly fixed to a fork head (10) according to one of claims 1 to 5.
